# EUROPEAN PATENT SPECIFICATION

(11) **EP 0 784 797 B1**
(45) Date of publication and mention of the grant of the patent: **27.03.2002**
(21) Application number: 95929386.1
(22) Date of filing: 04.08.1995
(51) Int. Cl.: G01P 9/04, G01P 15/13, G01P 15/14

(54) **PENDULOUS OSCILLATING GYROSCOPIC ACCELEROMETER**
KREISELBESCHLEUNIGUNGSMESSER MIT SCHWINGENDEM PENDEL
ACCELEROMETRE GYROSCOPIQUE OSCILLANT A PENDULE

(43) Date of publication of application: 23.07.1997
(73) Proprietor: Sapuppo, Michele S., Andover, MA 01810 (US)
(72) Inventor: Sapuppo, Michele S., Andover, MA 01810 (US)
(74) Representative: Jones, Graham H.
(86) International application number: US9509928
(87) International publication number: WO9706441

(56) References cited:
- GB-A- 1 109 634
- US-A- 2 902 772
- US-A- 4 007 412
- US-A- 4 599 896
- US-A- 5 457 993

## Description

### FIELD OF INVENTION

This invention relates to a pendulous gyroscopic accelerometer that develops pendulous torque and gyroscopic torque using oscillation rather than rotation.

### BACKGROUND OF INVENTION

The gyroscopic integrating accelerometer was first disclosed in U.S. Patent No. 1,940,387, "Gyroscopic Pendulum". The gyroscopic integrating accelerometer has a purposely unbalanced spinning gyroscope wheel that develops pendulous torque when it is accelerated along the input axis. The device then develops gyroscopic torque to balance out the pendulous torque. The angle of precession is proportional to the integral with respect to time of the acceleration along the input axis. Accordingly, by detecting the change in angle of the spin axis, the device is useful for determining acceleration along the input axis.

The concept of the pendulous integrating gyroscope was further developed after World War II. The pendulous integrating gyroscope accelerometer incorporates a purposely unbalanced, viscously damped, single degree of freedom gyroscope. The unbalance or pendulosity is made by offsetting the gyro wheel or by adding a pendulous mass along the spin axis. The pendulosity torque acting on the torque summing member of the gyroscope, caused by gravity or a specific force input such as acceleration, is counterbalanced by gyroscope precessional torque acting on the torque summing member in the opposing direction as a result of the rotation of the gyroscope about its input axis. The velocity of the gyroscope rotation is a direct indication of the acceleration being sensed. This device has a threshold sensitivity in the nano gravity range, and an operational range of 8 to 10 orders of magnitude.

There are a number of problems with the pendulous integrating gyroscope accelerometer, however, that have kept it from becoming an inexpensive, small, mass-producible device that can be used in commercial applications as opposed to defense and government applications in which cost is less of an issue. First, the rotating gyroscope wheel must be supported by bearings that will eventually wear. Additionally, the device requires a slip ring assembly to transfer power and excitations to the gyroscope assembly. This is another major failure mode associated with pendulous gyroscopic accelerometers. The devices also have a large number of parts which require extensive precision machining and assembly time. They also require a heavy viscous fluid for flotation and damping, and low viscosity fluid to partially float the weight of the gyroscope assembly and to lubricate the slip rings and bearings, both of which add to the number of assembly steps and thus the cost. Other problems with the device include the relatively large size and weight and the relatively large amount of operating power required to rotate the momentum mass and gyroscope assembly.

### SUMMARY OF INVENTION

It is therefore an object of this invention to provide a low-cost pendulous gyroscopic accelerometer.

It is a further object of this invention to provide an easy to fabricate pendulous gyroscopic accelerometer.

It is a further object of this invention to provide a pendulous gyroscopic accelerometer that has fewer wear out modes.

It is a further object of this invention to provide a pendulous gyroscopic accelerometer that requires less power to operate.

It is a further object of this invention to provide a pendulous gyroscopic accelerometer that may be fabricated using two-dimensional batch fabrication technology such as lithographic millimachining.

It is a further object of this invention to provide a pendulous gyroscopic accelerometer that does not require a slip ring assembly,

It is a further object of this invention to provide a pendulous gyroscopic accelerometer that does not require bearings.

It is a further object of this invention to provide a pendulous gyroscopic accelerometer that does not require heavy viscous fluid in the pendulous gyroscope for floating and damping.

It is a further object of this invention to provide a pendulous gyroscopic accelerometer that does not require a low viscosity fluid in the sealed assembly to lubricate the slip ring and bearings.

It is a further object of this invention to provide a pendulous gyroscopic accelerometer that is smaller and lighter by at least a factor of 10 than current pendulous gyroscopic accelerometers.

This invention results from the realization that a very small light weight pendulous gyroscopic accelerometer may he accomplished by oscillating the gyroscope wheel at resonant frequency, and oscillating the gyroscope case at resonant frequency to develop the angular momentum and rate input to the gyroscope.

This invention features a pendulous oscillating gyroscopic accelerometer, comprising: a momentum mass; a torque summing member which carries said momentum mass; a pendulous mass coupled to one or both of said momentum mass and said torque summing member to render one or both of said momentum mass and said torque summing member umbalanced; means for oscillating said momentum mass about a reference axis, the oscillation having a first amplitude and a first frequency; a gyroscope case; a pair of pivot mounts for pivotably mounting said torque summing member to said gyroscope case, to pivot said torque summing member and said momentum mass about an output axis perpendicular to the reference axis when an acceleration force acts on said pendulous mass along an input axis; means for resolving an angle of the pivot movement of said torque summing member in relation to said gyroscope case; a fixed member; at least one flexure mount for pivotably, flexibly mounting said gyroscope case to said fixed member to allow said gyroscope case to pivot about the input axis perpendicular to the reference axis; at least one oscillating member for applying torque to said flexure mount to oscillate said gyroscope case about the input axis, the oscillation having a second amplitude and a second frequency; and means, responsive to said means for resolving, for determining acceleration along the input axis.

The first frequency and the second frequency may be the same, and the oscillation of said momentum mass, and said oscillation of said gyroscope case may be in phase. The first amplitude may be constant, and the second amplitude may be constant, in which case the first frequency and the second frequency may be the same. The means for determining acceleration may include means for altering the oscillation amplitude of the gyroscope case to generate precessional torque to counterbalance pendulosity torque from movement of at least the momentum mass about the output axis.

The oscillation of the momentum mass and the oscillation of the gyroscope case may have a phase relationship, and the means for determining acceleration may include means for altering the phase relationship between the oscillation of the momentum mass and the oscillation of the gyroscope case to generate precessional torque to counterbalance pendulosity torque from movement of at least the momentum mass about the output axis.

The momentum mass may include a disc centered on the reference axis. The disc pendulous mass may be mounted to the disc and centered on the reference axis. The means for oscillating the momentum mass about the reference axis may include means in the torque summing member for oscillating the momentum mass. The momentum mass may include a beam member pivotable on the output axis. The reference axis may be perpendicular to the input axis.

### DISCLOSURE OF PREFERRED EMBODIMENTS

Other objects, features and advantages will occur to those skilled in the art from the following description of a preferred embodiment and the accompanying drawings in which:
Fig. 1A is an axonometric, schematic view of a pendulous oscillating gyroscopic accelerometer according to this invention;
Fig. 1B is a similar view of an alternate design for the accelerometer of this invention;
Fig. 2 is a block diagram of the accelerometer of Figs. 1A and 1B;
Figs. 3A through 3D are graphs of the pendulous torque, the oscillating wheel angular momentum, the oscillation of the gyroscope case about the input axis, and the gyroscopic torque developed about the output axis, respectively, of the device of Figs. 1A and 1B for in-phase oscillation operation of the device with variable gyro angular amplitude, for the case of zero specific force input;
Figs. 4A through 4D are the same graphs but for a constant specific force input;
Figs. 5A through 5D are again the same graphs but for a linearly increasing specific force input;
Figs. 6A through 6D are the same graphs but for a second operational case in which the gyro oscillation is of a fixed amplitude and at the same frequency as the wheel oscillation, in which the phase relationship between the wheel and gyro oscillations are variable, for the case of zero specific force input;
Figs. 7A through 7D are equivalent to Figs. 4A and 4D for this second operational case; and
Figs. 8A through 8D are equivalent to Figs. 5A through 5D for this second operational case.

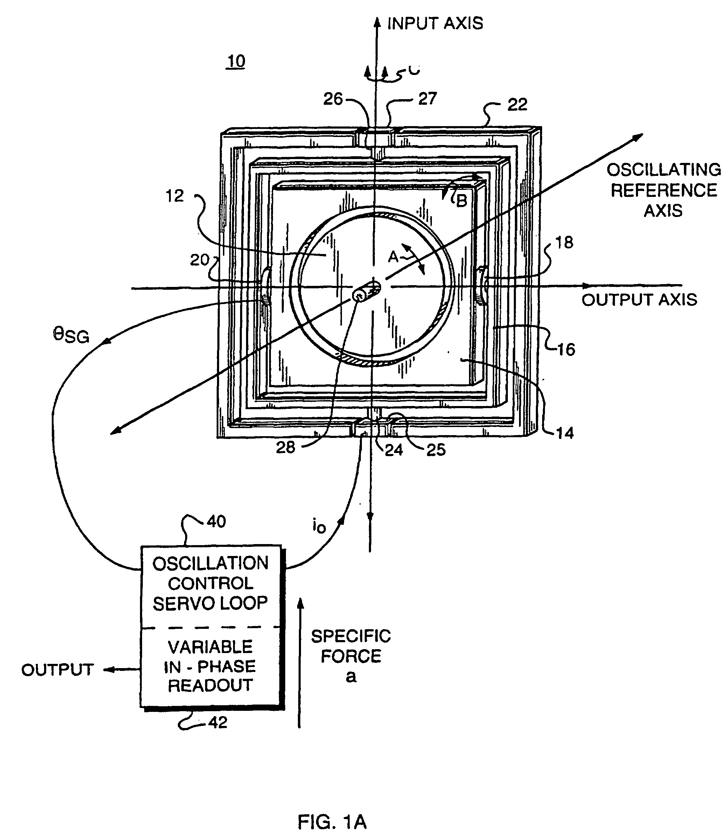

There is shown in Fig. 1A pendulous oscillating gyroscopic accelerometer 10 according to this invention. Device 10 includes disc or wheel 12 that is oscillated about the oscillating reference axis as shown by arrow A. Disc 12 is a momentum mass that rides within torque summing member 14 which itself is pivotably mounted to pendulous gyroscope case 16 by mounts 18 and 20 that allow member 14 to pivot about the output axis as shown by arrow B. Gyro case 16 is itself pivotably attached to fixed member 22 through mounts 24 and 26 and oscillating member 25 and 27, respectively, that oscillate gyro case 16 about the input axis as shown by arrow C.

The pendulosity in this case is created by mass 28 that may be fixed to disc 12 or torque summing member 14. The pendulosity is acted upon by a specific force a acting along the input axis. Oscillation control servo loop 40 has as its input the tilt angle of torque summing member 14 in relation to case 16 as member 14 pivots about the output axis. Servo loop 40 provides in response a current i₀ that is used to drive oscillators 25 and 27 to develop gyroscopic torque to counter balance the pendulosity. Alternatively, a single oscillator could be used. The pendulosity is balanced by the gyroscope precessional torque which is created by the cross-product of the momentum of momentum mass 12 and the oscillating input rate of the gyroscope case 16 about the input axis. Read out 42 is optional for one operational mode in which the oscillations are in-phase as more fully described below. In each operational case, an output from servo loop 40 is used as an indication of acceleration force a along the direction of the input axis.

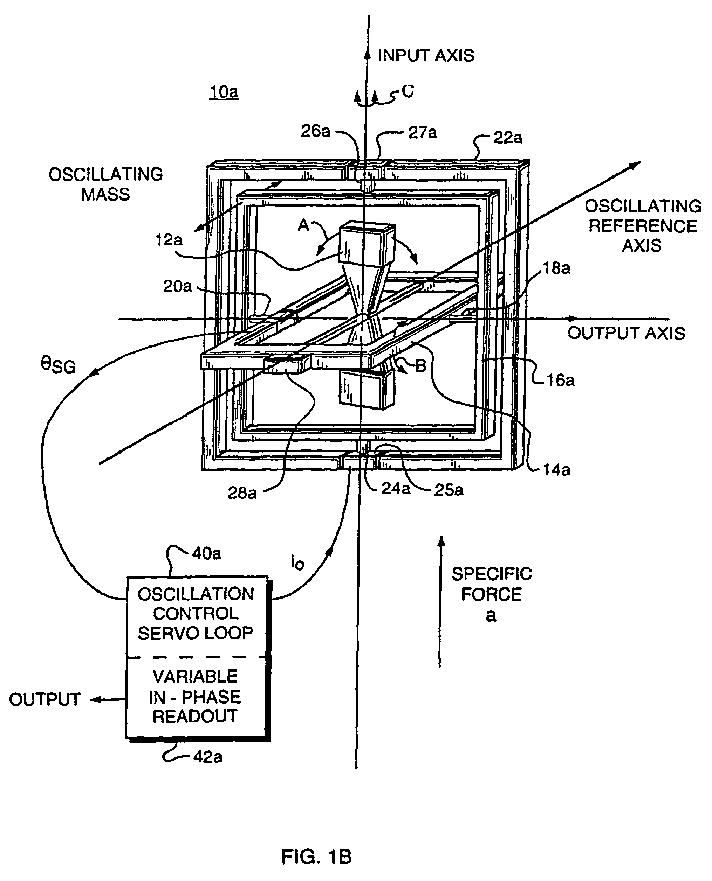

Fig. 1B is a schematic diagram of an alternative design of the pendulous oscillating gyroscopic accelerometer 10a of this invention. In this case, the oscillating mass 12a is in the form of a vibrating beam that oscillates about the oscillating reference axis as shown by arrow A. Torque summing member 14a carries pendulous mass 28a. The tilt angle of torque summing member 14a about the output axis is detected at pivot 20a.

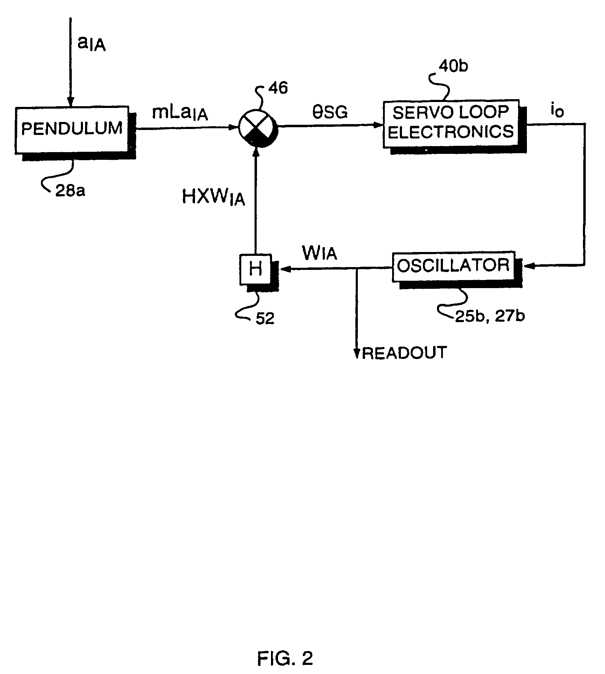

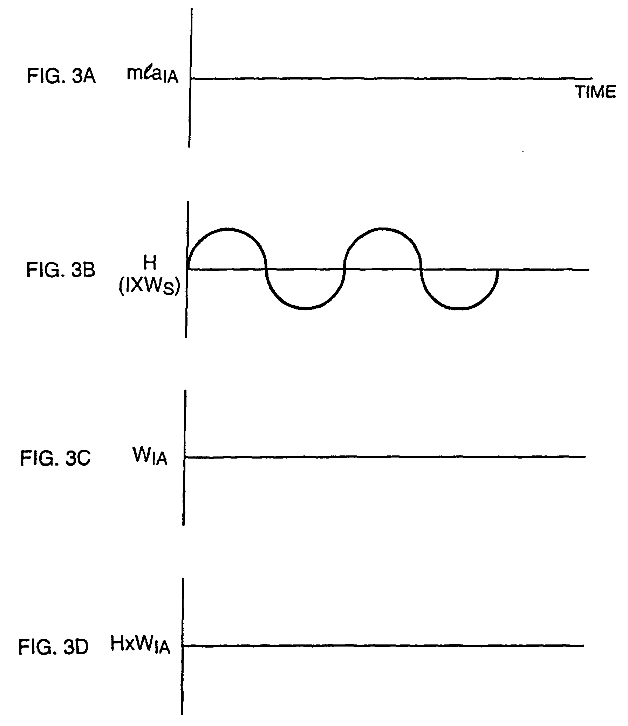

The theory of operation of the pendulous oscillating gyroscopic accelerometer of this invention is more fully understandable by viewing the block diagram of the device, Fig. 2, along with the graphs of Figs. 3 through 8. The Fig. 2 block diagram of the pendulous oscillating gyroscopic accelerometer of this invention shows force a_{1A} (the specific force along input axis IA) acting on pendulous mass 28a to create a pendulous torque mLa_{IA} provided to summer 46. θ_{SG} is the angle reading from the signal generator built in to pivot 20 that indicates the angle of member 14 in relation to case 16. In response to this detected angle, servo loop electronics 40b outputs a current to drive oscillators 25b and 27b to oscillate gyro case 16 about the input axis to develop gyroscopic torque to counter balance the pendulosity of pendulum 28a. The gyroscope precessional torque is the cross product of the oscillating wheel angular momentum H and the oscillation of the gyroscope case about the input axis, W_{IA}.

There are at least two conditions under which the oscillating gyroscope will react with the oscillating momentum mass to produce precessional torque that will in turn counterbalance the pendulous torque. In both situations, the momentum mass and the gyroscope must oscillate at the same frequency. The phase relationship between these two oscillations defines the precessional torque.

In the first operational case illustrated in Figs. 3 through 5, the oscillation of the momentum mass and the gyroscope case are 100% in-phase. Changes in precessional torque to balance out pendulous torque changes produced by varying acceleration inputs are reflected in changing angular amplitude of the gyroscope oscillation.

Figs. 3A through 3D illustrate various values for this first operational case, for a zero specific force input. This creates zero pendulous torque, Fig. 3A. The gyroscope wheel is constantly oscillating with an angular momentum H as shown in Fig. 3B. Since there is no specific force input, there is no signal coming out of the signal generator along the output axis to oscillate the gyroscope about input axis IA. Accordingly, the oscillating input rate W_{IA} of the gyroscope is zero, and therefore there is no cross product gyroscope precessional torque H × W_{IA}.

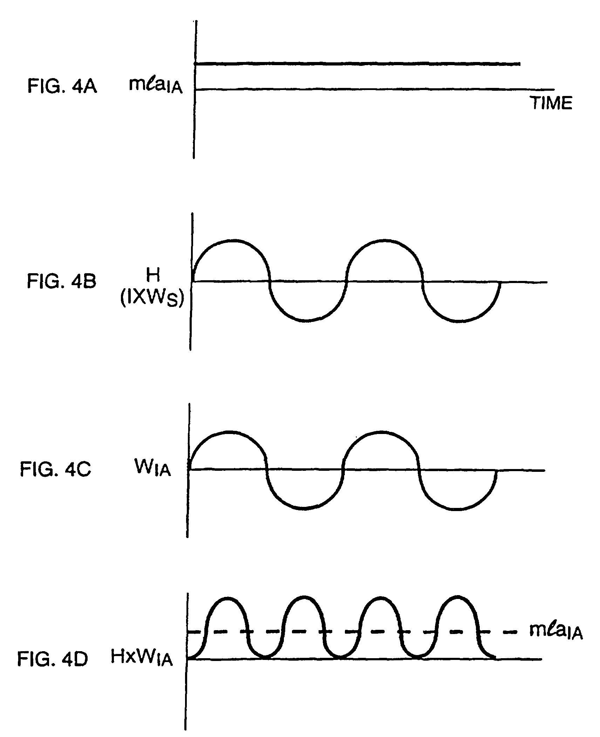

Figs. 4A through 4D are the same graphs as Figs. 3A through 3D, except that they illustrate the result of a constant force input creating a constant pendulous torque, Fig. 4A. The signal from output axis OA to the oscillation control servo loop in this case drives the gyroscope in an oscillatory manner about its input axis IA as shown in Fig. 4C. The gyro oscillation is 100% in phase with the momentum mass oscillation. The in-phase coupling between the oscillating momentum mass and the oscillating gyroscope generates precessional torque, Fig. 4D, to counterbalance the pendulosity torque, Fig. 4A. The angular amplitude and angular rate amplitude of the gyro oscillation, Fig. 4C, are each proportional to the specific force being sensed.

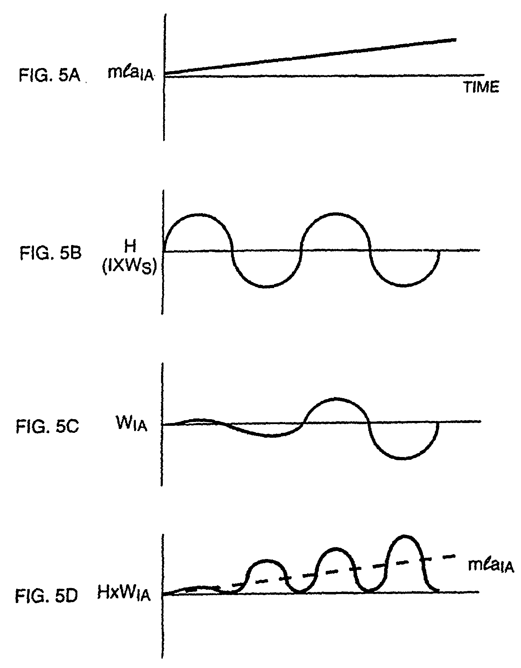

A third example fully illustrating this in-phase operational case is shown in Figs. 5A through 5D, in which there is a linearly increasing specific force input that creates a linearly increasing pendulosity torque, Fig. 5A. The signal from the signal generator indicating the angle about output axis OA to the servo loop drives the gyroscope in a linearly-increasing oscillatory manner about the input axis, but always 100% in phase with the constant oscillation of the momentum mass as shown in Figs. 5B and 5C. As with the previous figure, the in-phase coupling between the oscillating momentum mass and the linearly-increasing oscillating gyro generates precessional torque to counter balance the linearly increasing pendulosity torque. The increasing angular amplitude and angular rate amplitude of the gyro oscillation, Fig. 5C, are each a measure of the specific force being sensed.

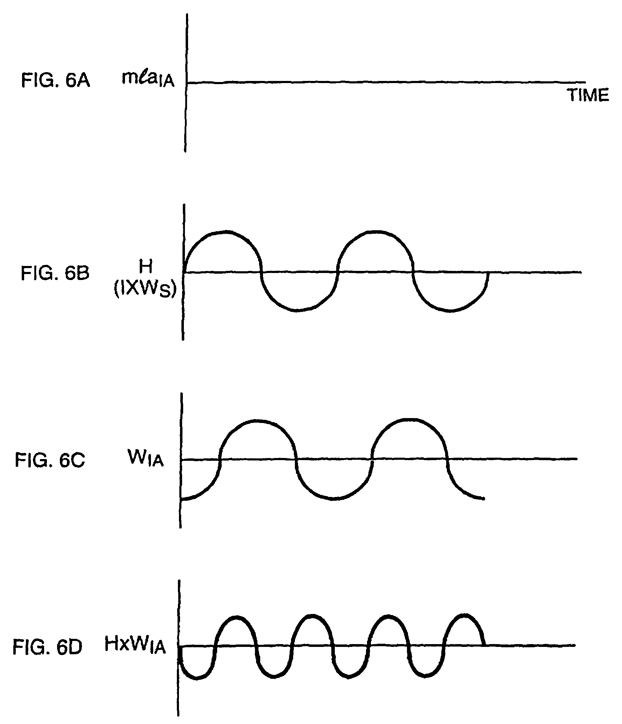

The second operational case, in which the momentum mass and the gyro are oscillating at the same frequency, is shown in Figs. 6 through 8. In this second case, the momentum mass and the gyroscope case are made to oscillate at the same frequency and with fixed oscillation amplitudes. Changes in precessional torque to balance out pendulous torque change is produced by varying the amount of in-phase relationship between the oscillating momentum mass and the oscillating gyroscope.

For zero specific force input, Figs. 6A through 6D, the momentum mass oscillation, Fig. 6B and the gyro oscillation, Fig. 6C, are 90° out of phase, and no net torque is generated as illustrated in Fig. 6D.

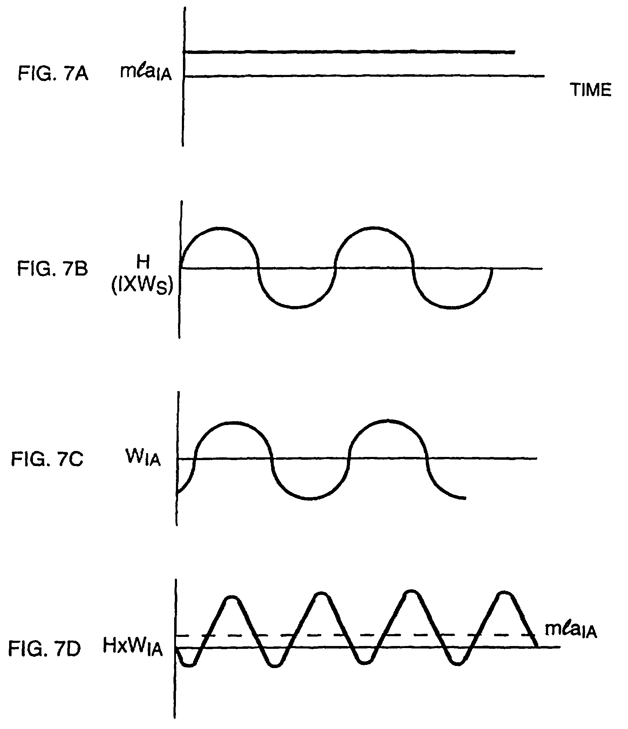

For a constant positive specific force input, Figs. 7A through 7D, the signal to . the servo loop indicating the torque summing member tilt about axis OA shifts the gyroscope oscillation to be more in phase with the momentum mass oscillation in order to generate the precessional torque necessary to counterbalance the pendulosity torque. The amount of in phase component of the gyroscope oscillation and the percent in phase between the gyroscope and the momentum mass oscillation are each a measure of a specific force being sensed.

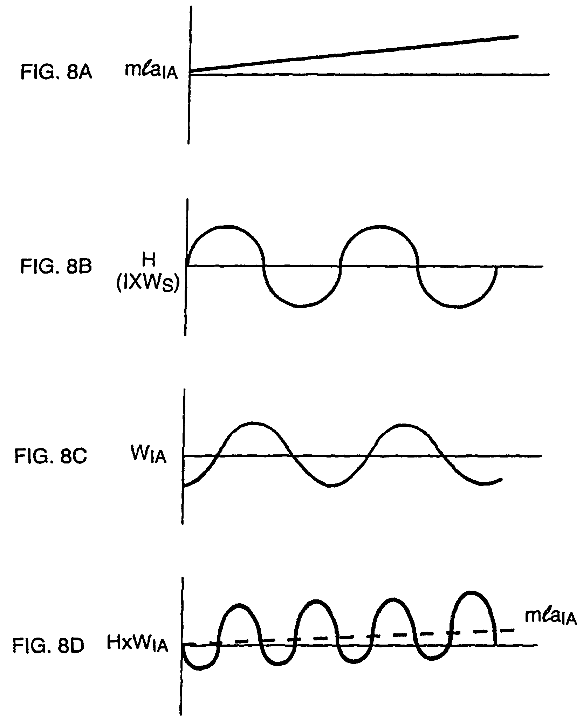

Figs. 8A through 8D illustrate this second operational case for the situation in which there is a linearly increasing specific force input generating a linearly increasing. pendulous torque, Fig. 8A. In this case, the signal from the torque summing member output axis OA to the servo loop shifts the gyroscope oscillation in a linearly-increasing in-phase relationship to the momentum mass oscillation. The in-phase relationship between the oscillations is zero at zero specific force input, and is 100% in phase at the maximum specific force which can be sensed by the gyroscope (the point at which the maximum precessional torque is generated).

The gyroscope configurations shown in Figs. 1A and 1B are simple, virtually two dimensional devices that are capable of being micro or milli machined using standard batch fabrication techniques, greatly reducing the cost of the device. Since no floatation is required or desired, the torque summing member 14 does not have to be enclosed or supported by the heavy viscous fluid found in the currently-available pendulous gyroscopes. Further, there are no bearings or slip-rings, which eliminates many assembly steps in the fabrication process as well as the major wear out modes in the rotational gyroscopes.

The operating power is much lower first because of the greatly reduced size and weight of the device. For example, a typical pendulous integrating gyroscopic accelerometer has a volume of 163 to 326 cm³ (10 to 20 in³), weighs 0,45 to 1,36 kg (1 to 3 pounds), and consumes 5 to 10 watts as opposed to the device of Fig. 1A, which has a volume of about 1,63 cm³ (0.1 in³), weighs about 4,54 g (0.01 pounds), and consumes less than 0.5 watts. Further, by making pivot connecting members 26 and 24 of spring steel or the like, the gyroscope can be oscillated at its resonant frequency which allows the device to use the spring energy of mounts 24 and 26 to reduce energy consumption by orders of magnitude. In addition, smaller oscillating motors 25 and 27 can be used, therefore there is less heat to dissipate.

The gyroscope could also be operated in a manner in which the gyro case was constantly oscillated, and the momentum mass oscillation was controlled to accomplish the torque balancing.

There are a number of manners in which the momentum mass 12 can be caused to oscillate. In one example, mass 12 may be a permanent magnet that could be oscillated with magnetic fields created on member 14. The signal generator built in to pivot 20 then would sense rotation about the output axis in a manner known in the art, such as by using electromagnetic, capacitive or optical sensing devices. Tunneling sensors could be used for detecting extremely small motions.

There is no requirement for the device of this invention to have the configuration shown in Figs. 1A and 1B. It is merely necessary to have a mass that is oscillatable in two transverse (preferably perpendicular) axes, and rotatable about the output axis, in which there is also a pendulosity about the output axis. This could be accomplished in a more one dimensional format with the beam or dumbbell-shaped mass of Fig. 1B. Alternatively, the oscillating member and the gyro case could be concentric cylinders and still accomplish the design goals of this invention. Other constructions would also be envisioned by those skilled in the art.

The device of this invention may also be used as a stable reference device. If the gravity or acceleration is accurate or stable, and the oscillation of the gyro assembly is held constant, variations in the pendulosity of the device may be measured as reference parameters. In this case as well, the oscillating momentum mass momentum excitation parameters such as frequency, voltage and current may be measured as reference parameters. In the case in which the oscillation of the momentum mass is held constant, the gyroscope assembly oscillation excitation parameters such as frequency, voltage and current may be measured as reference parameters.

Although specific features of the invention are shown in some drawings and not others, this is for convenience only as some feature may be combined with any or all of the other features in accordance with the invention as claimed.

## Claims

1. A pendulous oscillating gyroscopic accelerometer, comprising:
a momentum mass (12);
a torque summing member (14) which carries said momentum mass (12);
a pendulous mass (28) coupled to one or both of said momentum mass (12) and said torque summing member (14) to render one or both of said momentum mass (12) and said torque summing member (14) umbalanced;
means for oscillating said momentum mass (12) about a reference axis , the oscillation having a first amplitude and a first frequency;
a gyroscope case (16);
a pair of pivot mounts (18,20) for pivotably mounting said torque summing member (14) to said gyroscope case (16), to pivot said torque summing member (14) and said momentum mass (12) about an output axis perpendicular to the reference axis when an acceleration force acts on said pendulous mass (28) along an input axis;
means for resolving an angle of the pivot movement of said torque summing member (14) in relation to said gyroscope case (16);
a fixed member (22);
at least one flexure mount (24, 26) for pivotably, flexibly mounting said gyroscope case (16) to said fixed member (22) to allow said gyroscope case( 16) to pivot about the input axis perpendicular to the reference axis;
at least one oscillating member (25, 27) for applying torque to said flexure mount (24, 26) to oscillate said gyroscope case (16) about the input axis, the oscillation having a second amplitude and a second frequency; and
means (42), responsive to said means for resolving, for determining acceleration along the input axis.

2. The pendulous oscillating gyroscopic accelerometer of claim 1 in which said first frequency and said second frequency are the same, and in which said oscillation of said momentum mass (12), and said oscillation of said gyroscope case (16) are in phase.

3. The pendulous oscillating gyroscopic accelerometer of claim 1 in which said first amplitude is constant, said second amplitude is constant, and said first frequency and said second frequency are the same.

4. The pendulous oscillating gyroscopic accelerometer of claim 2 in which said means (42) for determining acceleration includes means for altering the oscillation amplitude of said gyroscope case (16) to generate precessional torque to counterbalance pendulosity torque from movement of at least said momentum mass (12) about the output axis.

5. The pendulous oscillating gyroscopic accelerometer of claim 3 wherein the oscillation of said momentum mass (12) and the oscillation of said gyroscope case (16) have a phase relationship, and in which said means (42) for determining acceleration includes means for altering the phase relationship between the oscillation of said momentum mass (12) and the oscillation of said gyroscope case (16) to generate precessional torque to counterbalance pendulosity torque from movement of at least said momentum mass (12) about the output axis.

6. The pendulous oscillating gyroscopic accelerometer of claim 1 in which said momentum mass (12) includes a disc centered on the reference axis.

7. The pendulous oscillating gyroscopic accelerometer of claim 6 in which said pendulous mass (28) is mounted to said disc and centered on the reference axis.

8. The pendulous oscillating gyroscopic accelerometer of claim 1 in which said means for oscillating said momentum mass (12) about the reference axis includes means in said torque summing member (14) for oscillating said momentum mass.

9. The pendulous oscillating gyroscopic accelerometer of claim 1 in which said momentum mass includes a beam member (12a) pivotable on the output axis.

10. The pendulous oscillating gyroscopic accelerometer of claim 1 in which the reference axis is perpendicular to the input axis.

## Patentansprüche

1. Ein Kreiselbeschleunigungsmesser mit schwingendem Pendel, aufweisend:
eine Drehmasse (12);
ein Drehmoment-Summierungsglied (14), das besagte Drehmasse (12) trägt;
eine Pendel Masse (28), die an eine oder beide besagter Drehmasse (12) und besagten Drehmoment-Summierungsgliedes (14) gekoppelt ist um eine oder beide besagter Drehmasse (12) und besagten Drehmoment-Summierungsgliedes (14) außer Gleichgewicht zu bringen;
Einrichtungen um besagte Drehmasse (12) um eine Bezugsachse schwingen zu lassen, wobei die Schwingung eine erste Amplitude und eine erste Frequenz hat;
ein Kreiselgehäuse (16);
ein Paar von Schwenk-Anbringungen (18, 20) um besagtes Drehmoment-Summierungsglied (14) an besagtem Kreiselgehäuse (16) schwenkbar anzubringen um besagtes Drehmoment-Summierungsglied (14) und besagte Drehmasse (12) um eine Ausgangsachse senkrecht zu der Bezugsachse zu schwenken wenn eine Beschleunigungskraft auf besagte Pendel-Masse (28) längs einer Eingangsachse wirkt;
Einrichtungen um einen Winkel der Schwenkbewegung besagten Drehmoment-Summierungsgliedes (14) im Verhältnis zu besagtem Kreiselgehäuse (16) zu liefern;
ein ortsfestes Glied (22);
mindestens eine Biege-Anbringung (24, 26) um besagtes Kreiselgehäuse (16) schwenkbar, flexibel an besagtem ortfestem Glied (22) anzubringen um zu ermöglichen, daß besagtes Kreiselgehäuse (16) um die Eingangsachse senkrecht zur Bezugsachse schwenkt;
mindestens ein schwingendes Glied (25, 27) um Drehmoment an besagte Biege-Anbringung (24, 26) anzulegen um besagtes Kreiselgehäuse (16) um die Eingangsachse schwingen zu lassen, wobei die Schwingung eine zweite Amplitude und eine zweite Frequenz hat; und
Einrichtungen (42), die auf besagte Einrichtungen zum Liefern ansprechen, um die Beschleunigung längs der Eingangsachse zu bestimmen.

2. Der Kreiselbeschleunigungsmesser mit schwingendem Pendel des Anspruchs 1, bei dem besagte erste Frequenz und besagte zweite Frequenz gleich sind, und bei dem besagte Schwingung besagter Drehmasse (12) und besagte Schwingung besagten Kreiselgehäuses (16) sich in Phase befinden.

3. Der Kreiselbeschleunigungsmesser mit schwingendem Pendel des Anspruchs 1, bei dem besagte erste Amplitude konstant ist, besagte zweite Amplitude konstant ist, und besagte erste Frequenz und besagte zweite Frequenz die gleiche sind.

4. Der Kreiselbeschleunigungsmesser mit schwingendem Pendel des Anspruchs 2, bei dem besagte Einrichtungen (42) zum Bestimmen der Beschleunigung Einrichtungen zum Ändern der Schwingungsamplitude besagten Kreiselgehäuses (16) aufweisen um ein Präzessions-Drehmoment zu erzeugen um das Pendel-Drehmoment aus der Bewegung mindestens besagter Drehmasse (12) um die Ausgangsachse zu kompensieren.

5. Der Kreiselbeschleunigungsmesser mit schwingendem Pendel des Anspruchs 3, wobei die Schwingung besagter Drehmasse (12) und die Schwingung besagten Kreiselgehäuses (16) eine Phasenbeziehung haben, und bei dem besagte Einrichtungen (42) zur Bestimmung der Beschleunigung Einrichtungen zum Ändern der Phasenbeziehung zwischen der Schwingung besagter Drehmasse (12) und der Schwingung besagten Kreiselgehäuses (16) aufweisen um ein Präzessions-Drehmoment zu erzeugen um das Pendel-Drehmoment aus der Bewegung von mindestens besagter Drehmasse (12) um die Ausgangsachse zu kompensieren.

6. Der Kreiselbeschleunigungsmesser mit schwingendem Pendel des Anspruchs 1, bei dem besagte Drehmasse (12) eine Scheibe, die auf der Bezugsachse zentriert ist, aufweist.

7. Der Kreiselbeschleunigungsmesser mit schwingendem Pendel des Anspruchs 6, bei dem besagte Pendel-Masse (28) an besagter Scheibe angebracht ist und auf die Bezugsachse zentriert ist.

8. Der Kreiselbeschleunigungsmesser mit schwingendem Pendel des Anspruchs 1, bei dem besagte Einrichtungen um besagte Drehmasse (12) um die Bezugsachse schwingen zu lassen Einrichtungen in besagtem Drehmoment-Summierungsglied (14) aufweisen um besagte Drehmasse schwingen zu lassen.

9. Der Kreiselbeschleunigungsmesser mit schwingendem Pendel des Anspruchs 1, bei dem besagte Drehmasse ein Balkenglied (12a), das auf der Ausgangsachse schwenkbar ist, aufweist.

10. Der Kreiselbeschleunigungsmesser mit schwingendem Pendel des Anspruchs 1, bei dem die Bezugsachse senkrecht zur Eingangsachse ist.

## Revendications

1. Accéléromètre gyroscopique à pendule oscillant comprenant :
une masse d'inertie (12) ;
un organe d'addition de couple (14) qui porte ladite masse d'inertie (12) ;
une masse pendulaire (28) couplée à ladite masse d'inertie (12) et/ou audit organe d'addition de couple (14) pour déséquilibrer ladite masse d'inertie (12) et/ou ledit organe d'addition de couple (14) ;
un moyen pour faire osciller ladite masse d'inertie (12) autour d'un axe de référence, l'oscillation présentant une première amplitude et une première fréquence ;
un boîtier de gyroscope (16) ;
une paire de supports à pivot (18, 20) pour monter à pivotement ledit organe d'addition de couple (14) sur ledit boîtier de gyroscope (16) de manière à faire pivoter ledit organe d'addition de couple (14) et ladite masse d'inertie (12) autour d'un axe de sortie perpendiculaire à l'axe de référence lorsqu'une force d'accélération agit sur ladite masse pendulaire (28) le long d'un axe d'entrée ;
un moyen pour détecter un angle du déplacement de pivotement dudit organe d'addition de couple (14) par rapport audit boîtier de gyroscope (16) ;
un organe fixe (22) ;
au moins un support flexible (24, 26) pour monter de façon pivotante et flexible ledit boîtier de gyroscope (16) sur ledit organe fixe (22) pour permettre audit boîtier de gyroscope (16) de pivoter autour de l'axe d'entrée perpendiculaire à l'axe de référence ;
au moins un organe oscillant (25, 27) pour appliquer un couple sur ledit support flexible (24, 26) pour faire osciller ledit boîtier de gyroscope (16) autour de l'axe d'entrée, d'oscillation présentant une deuxième amplitude et une deuxième fréquence ; et
un moyen (42) répondant audit moyen de résolution pour déterminer l'accélération suivant l'axe d'entrée.

2. Accéléromètre gyroscopique à pendule oscillant selon la revendication 5, dans lequel ladite première fréquence et ladite deuxième fréquence sont identiques, et dans lequel ladite oscillation de ladite masse d'inertie (12) et ladite oscillation dudit boîtier de gyroscope (16) sont en phase.

3. Accéléromètre gyroscopique à pendule oscillant selon la revendication 1, dans lequel ladite première amplitude est constante, ladite deuxième amplitude est constante et ladite première fréquence et ladite deuxième fréquence sont identiques.

4. Accéléromètre gyroscopique à pendule oscillant selon la revendication 2, dans lequel ledit moyen (42) pour déterminer l'accélération comprend un moyen pour modifier l'amplitude des oscillations dudit boîtier de gyroscope (16) pour créer un couple de précession pour contrebalancer le couple pendulaire résultant du déplacement de ladite masse d'inertie (12), au moins une, autour de l'axe de sortie.

5. Accéléromètre gyroscopique à pendule oscillant selon la revendication 3, dans lequel l'oscillation de ladite masse d'inertie (12) et l'oscillation dudit boîtier de gyroscope (16) ont une relation de phase, et dans lequel ledit moyen (42) pour déterminer l'accélération comprend un moyen pour modifier la relation de phase entre l'oscillation de ladite masse d'inertie (12) et l'oscillation dudit boîtier de gyroscope (16) pour créer un couple de précession pour contrebalancer le couple pendulaire découlant du déplacement de la masse d'inertie (12), au moins une, autour de l'axe de sortie.

6. Accéléromètre gyroscopique à pendule oscillant selon la revendication 1, dans lequel ladite masse d'inertie (12) comprend un disque centré sur l'axe de référence.

7. Accéléromètre gyroscopique à pendule oscillant selon la revendication 6, dans lequel ladite masse pendulaire (28) est montée sur ledit disque et est centrée sur ledit axe de référence.

8. Accéléromètre gyroscopique à pendule oscillant selon la revendication 1, dans lequel ledit moyen pour faire osciller ladite masse d'inertie (12) autour de l'axe de référence comprend dans ledit organe (14) d'addition de couple un moyen pour faire osciller ladite masse d'inertie.

9. Accéléromètre gyroscopique à pendule oscillant selon la revendication 1, dans lequel ladite masse d'inertie comprend un organe en poutre (12a) apte à pivoter sur l'axe de sortie.

10. Accéléromètre gyroscopique à pendule oscillant selon la revendication 1, dans lequel l'axe de référence est perpendiculaire à l'axe d'entrée.
